(19) Europäisches Patentamt
European Patent Office
Office européen des brevets

(11) Veröffentlichungsnummer: **0 495 355 A1**

(12) **EUROPÄISCHE PATENTANMELDUNG**

(21) Anmeldenummer: **92100052.7**

(22) Anmeldetag: **03.01.92**

(51) Int. Cl.[5]: **C08F 222/02**, C08F 220/04, C08F 230/02

(30) Priorität: **12.01.91 DE 4100760**

(43) Veröffentlichungstag der Anmeldung: **22.07.92 Patentblatt 92/30**

(84) Benannte Vertragsstaaten: **AT DE ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Krull, Matthias, Dr.**
**Erlenweg 5**
**W-6232 Bad Soden am Taunus(DE)**
Erfinder: **Ritschel, Werner, Dr.**
**Kohlweg 11**
**W-6240 Königstein/Taunus (verstorben)(DE)**
Erfinder: **Hoffmann, Herrmann, Dr.**
**In den Padenwiesen 13**
**W-6233 Kelkheim (Taunus)(DE)**
Erfinder: **Balzer, Juliane**
**Im Trutz 51**
**W-6000 Frankfurt am Main(DE)**
Erfinder: **Buch, Wolfgang**
**Manderscheiderstrasse 27**
**W-6000 Frankfurt am Main 71(DE)**

(54) **Copolymere aus Diallylaminoalkylenphosphonaten und ungesättigten Carbonsäuren.**

(57) Copolymere erhältlich durch Copolymerisation bei Temperaturen oberhalb 70 °C von 0,1 bis 50 Mol-% mindestens eines Diallylaminomethylenphosphonats und 99,9 bis 50 Mol-% einer ungesättigten Carbonsäure sowie gegebenenfalls weiterer ungesättigter Monomere. Die Copolymerisate dieser Art eignen sich als Mittel zur Verhinderung der Steinbildung (Scale-inhibitor) sowie als Builder oder Co-builder in Waschmitteln.

EP 0 495 355 A1

Beim Fördern von Öl, Wasser und Gas aus unterirdischen Formationen kann durch das Mischen von unterschiedlichen salinen Wässern im Bohrloch, durch Temperatur- sowie Druckschwankungen und ähnliches während der Förderung Steinbildung (Scale-Bildung) d.h. die Ausfällung von wenig löslichen Salzen der Erdalkalimetalle auftreten. Steinbildungen können u. a. zu verstopften Bohrlöchern, Förderrohren und Pipelines sowie zu hängengebliebenen Pumpen und Ventilen führen und erhebliche Reparaturkosten verursachen.

Zur Verhinderung der Steinbildung werden salinen Wässern zum einen hochmolekulare Polycarbonsäuren (bevorzugt gegen Erdalkalisulfat) und zum anderen niedermolekulare Polyelektrolyte wie Aminomethylenphosphonsäuren (bevorzugt gegen Erdalkalicarbonat) in unterstöchiometrischen Mengen im Bereich von 1 bis 100 ppm zugesetzt. Man nimmt an, daß für diesen sogenannten "Threshold-Effekt" der Polyelektrolyt auf den Kristallitoberflächen absorbiert wird und so das weitere Kristallwachstum stört bzw. unterbindet.

Aminomethylenphosphonsäuren (z.B. ®Dequest, Monsanto) sowie andere niedermolekulare Polyelektrolyte wie z.B. EDTA und Triphosphate besitzen auf Grund ihres guten Calcium- und Schwermetallbindevermögens auch eine breite praktische Anwendung in der Bleichwäsche. Die vorhandenen Schwermetalle verringern in Waschmittelformulierungen die Lagerstabilität und schädigen bei der Bleiche die Fasern, sie müssen daher bei der Bleichwäsche möglichst entfernt werden. Des gleichen haben hochmolekulare Polycarbonsäuren (Ragnetti; Tenside, Surfactants, Detergents 1989, 26, 30) eine große Bedeutung als Co-Builder in phosphatfreien und -reduzierten Waschmitteln. Vermutlich transportieren sie wasserlösliche Metallionen, besonders Calciumionen, aus der wäßrigen Waschmittellauge in die hier als Builder benutzten wasserunlöslichen Zeolithe.

Die vorliegende Erfindung betrifft Copolymere, die die Eigenschaften dieser beiden Substanzklassen in sich vereinigen.

(Co)polymerisierbare Phosphonsäurederivate sind durch Mannich-Reaktion von (Di-)allylaminen mit Aldehyden und phosphoriger Säure zugänglich (K. Moedritzer, R. R. Irani; J. Org. Chem. 1966, 31, 1603). Homopolymere der Diallylaminomethylenphosphonsäure lassen sich in flammhemmenden Geweben (JP 76 07,214) sowie als Komplexierungsreagenz für Zinkionen (JP 78 19,921) einsetzen. Sie besitzen jedoch, wie auch ihre hochmolekularen Copolymere mit ungesättigten Carbonsäuren, keine Wirkung als Scaleinhibitor in salinen Wässern oder als Builder bzw. Cobuilder in Waschmitteln. Der auf ähnliche Weise zugängliche Polyelektrolyt Poly(Diallyldimethylammoniumchlorid) findet u. a. Verwendung als Flockungsmittel (C. Wandrey et. al.; Wasserwirtschaft 1984, 8, 185).

Copolymere aus Diallylaminomethylenphosphonsäure und anderen ungesättigten Monomeren wie beispielsweise Acrylsäure, Acrylsäureestern oder Acrylsäureamiden sind bereits in der JP-OS 50-72 987 beschrieben. Die Copolymerisate werden durch Polymerisation bei Temperaturen bis 70 °C hergestellt. Bedingt durch diese relativ niedrige Polymerisationstemperatur besitzen diese Copolymerisate ein relativ hohes Molekulargewicht. Derartige Produkte sind jedoch nicht als Scale-inhibitor brauchbar.

Es wurde nun gefunden, daß solche Copolymerisate auf der Basis von Diallylaminomethylenphosphonsäuren wesentlich wirksamer als Scale-inhibitoren sind, wenn das Molekulargewicht der Copolymerisate niedriger ist (K-Werte im Bereich von 10 bis 100; Eigenviskosität gemessen nach Ubbelohde) als bei den Copolymerisaten der JP-OS 502 987. Diese Erniedrigung des Molekulargewichts wird erzielt durch eine Erhöhung der Polymerisationstemperatur und/oder Zugabe eines Reglers zum Polymerisationssystem.

Gegenstand der Erfindung sind somit Copolymere mit einem niedrigen mittleren Molekulargewicht entsprechend einer Eigenviskosität von 10 bis 100 (gemessen nach Ubbelohde) aus 0,1-50 Mol-%, bevorzugt 1-15 Mol-% von mindestens einem Diallylaminomethylenphosphonat der Formel Ia oder Ib

$(CH_2=CH-CH_2)_2N^+(R^1)-CHR^2-PO_3M^-$,  (Ia)

$(CH_2=CH-CH_2)_2N-CHR^2-PO_3M_2$  (Ib)

worin $R^1$ für Wasserstoff, $C_1$- bis $C_{22}$-, bevorzugt $C_1$- bis $C_4$-Alkyl, Phenyl oder $C_2$- bis $C_4$-Alkenyl steht, $R^2$ für Wasserstoff, $C_1$- bis $C_4$-Alkyl oder Phenyl steht und M für Wasserstoff, ein Kation wie $Na^+$, $K^+$, $NH_4^+$, für $C_1$- bis $C_4$-Alkyl oder Benzyl steht, und 99,9-50 Mol-%, bevorzugt 99-85 Mol-% mindestens einer ethylenisch ungesättigten Carbonsäure der Formel II

$R^3R^4C=CR^5Y$,  (II)

worin $R^3$ für Wasserstoff oder eine Gruppe der Formel COOM steht, $R^4$ für Wasserstoff, Phenyl oder eine Gruppe der Formel COOM steht, $R^5$ für Wasserstoff, Methyl oder eine Gruppe der Formel COOM oder $CH_2COOM$ steht, Y für eine Gruppe der Formel COOM steht oder $R^4$ und $R^5$ zusammen für einen $C_4$-

Alkylenrest oder $R^4$ und Y zusammen für eine Gruppe der Formel -C(O)-O-C(O)- stehen oder $R^5$ und Y zusammen für eine Gruppe der Formel $-CH_2-C(O)-O-C(O)-$ stehen und M für Wasserstoff oder ein Kation steht,
sowie 0 bis 10 Mol-% weiterer ethylenisch ungesättigter Monomere.

Als Beispiele für die Monomere der Formel Ia/Ib seien Diallylaminomethylenphosphonsäure, Diallylaminoethylenphosphonsäure, Diallylaminobenzylidenphosphonsäure, Diallylaminomethylenphosphonsäurediethylester genannt, als Beispiele für Comonomere der Formel II stellvertretend Acrylsäure, Methacrylsäure, Maleinsäure, Maleinsäureanhydrid, Itaconsäure und Zimtsäure sowie deren niedere Alkylester wie Acrylsäuremethylester und Methacrylsäuremethylester. Erfindungsgemäß können zusätzlich aber auch weitere ethylenisch ungesättigte Monomere eingesetzt werden wie z.B. Vinylsulfonsäure, Vinylphosphonsäure, Vinylpyrrolidon, Acrylamid sowie dessen N- und N,N-Substitutionsprodukte wie N-Methylacrylamid oder 2-Acrylamido-2-methylpropansulfonsäure, und auch Allylverbindungen der Formel III

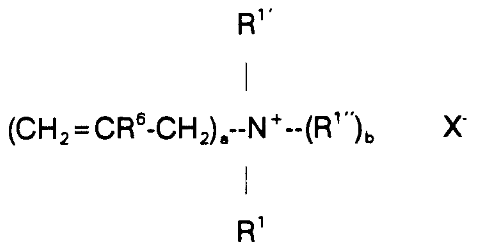

(III)

worin $R^1$, $R^{1'}$ und $R^{1''}$ unabhängig voneinander die oben für $R^1$ gegebenen Bedeutungen haben oder für die Gruppe $CHR^2-PO_3M_2$ stehen, M für Wasserstoff, ein Kation oder $C_1$- bis $C_4$-Alkyl oder Phenyl steht, $R^6$ für Wasserstoff oder Methyl steht, a = 1 oder 2, b = 0 oder 1 und a+b = 2 ist und $X^-$ für ein Anion einer organischen oder anorganischen Säure wie $Cl^-$, $Br^-$, $HSO_4^-$, $CH_3COO^-$ steht, insbesondere Allylamino-bis-(methylenphosphonsäure) und Allylaminobenzylidenphosphonsäure. Die bevorzugte Menge dieser Comonomere liegt dabei zwischen 0,001 und 10 Mol-%.

Die erfindungsgemäßen Copolymere von Diallylaminophosphonaten werden hergestellt, indem man Verbindungen der Formel Ia oder Ib, die gegebenenfalls mit Neutralisationssalzen wie Natriumsulfat oder Natriumchlorid verunreinigt sein können, und Verbindungen der Formel II sowie gegebenenfalls weitere ethylenisch ungesättigte Verbindungen in Wasser und/oder in mit Wasser mischbaren organischen Lösungsmitteln vorzugsweise bei Temperaturen oberhalb 70 °C mit einem Radikalkettenstarter, beispielsweise Ammoniumperoxodisulfat, Wasserstoffperoxid oder auch tert.-Butylhydroperoxid polymerisiert. Die Verbindungen der Formel Ia/Ib wie auch gegebenenfalls zugesetzte weitere Comonomere (z. B. solche der Formel III) können entweder in der wäßrigen Lösung vorgelegt oder zusammen mit den Verbindungen der Formel II in das Reaktionsgefäß gegeben werden. Die Gesamtmonomerkonzentration beträgt vorzugsweise 1 bis 60 Gew.-%, bevorzugt 10 bis 60 Gew.-%. Handelt es sich um wasserunlösliche Diallylaminomethylenphosphonsäuren, so können sie vorher in ihre Alkali- oder Ammoniumsalze überführt werden. Die Zugabe des gegebenenfalls in einem geeigneten Lösungsmittel gelösten Radikalstarters in das Reaktionsgefäß kann gleichzeitig mit oder auch nach der Zugabe der Verbindungen der Formeln Ia/Ib und II erfolgen.

Die Erzielung eines für die erfindungsgemäße Verwendung wichtigen niedrigen Molekulargewichts kann durch Polymerisation oberhalb 70 °C und/oder durch den Einsatz von niederen Alkoholen ($C_1$-$C_5$) als Lösungsmittel und/oder auch durch Zusatz von 0,001 bis 50 Gew.% bekannter Regler wie Thioglykolsäure oder Dodecanthiol zum Reaktionsansatz günstig beeinflußt werden. Die Gew.-% beziehen sich auf die Monomeren. Die Eigenviskosität K (Bestimmung nach Ubbelohde) der Polymere liegt zwischen 10 und 100, insbesondere zwischen 10 und 50.

Eine Variante des Verfahrens stellt die Polymerisation von öllöslichen Diallylaminomethylenphosphonsäuredialkylestern mit oleophilen Comonomeren in organischen Lösungsmitteln mit Radikalstartern wie AIBN oder organischen Peroxiden dar. Durch anschließende Hydrolyse der Ester- und Anhydridgruppen und Abdestillieren des organischen Lösungsmittels erhält man erfindungsgemäße Polymere. Geeignete Comonomere sind dabei unter anderem Acrylsäure, Maleinsäureanhydrid und Vinylacetat, bevorzugte Lösungsmittel sind aromatische, aliphatische und auch halogenierte Kohlenwasserstoffe.

Die viskosen Polymerlösungen werden je nach Verwendungszweck mit Basen auf den gewünschten pH-Wert gebracht, verdünnt oder sprühgetrocknet.
Den erfindungsgemäßen Copolymeren kommt die allgemeine Formel

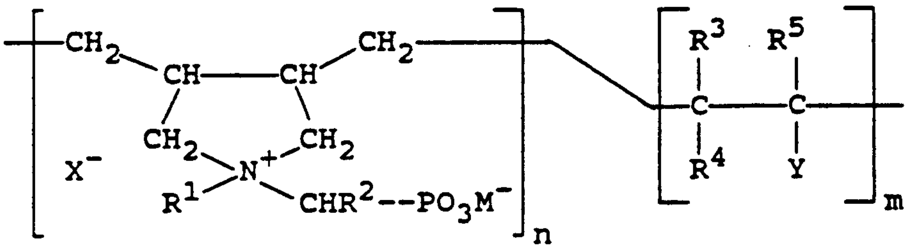

zu; es treten folglich kaum Quervernetzung und Bildung unlöslicher Strukturen auf.

Die erfindungsgemäßen Copolymere führen in salinen Formationswässern zu einer wirksamen Inhibierung sowohl von Erdalkalicarbonat- als auch Erdalkalisulfatablagerungen. Gleichzeitig haben sie eine Korrosionsschutzwirkung. Weiterhin können sie als Erdalkali- und Schwermetallkomplexbildner und auf Grund ihrer hervorragenden Dispergierwirkung auf Calciumcarbonat als Builder und Co-Builder in Waschmitteln verwendet werden.

Die Erfindung soll an Hand der folgenden Beispiele näher erläutert werden.

Beispiele

Die Prozentangaben sind in allen Fällen als Gewichtsprozente zu verstehen. Das in den Beispielen verwendete Wasser ist entionisiert. Die Eigenviskositätswerte K wurden nach Ubbelohde bestimmt.
Die Polymerisationen wurden in 1 L 5-Halskolben mit plangeschliffenem Deckel durchgeführt. Die Kolben sind ausgestattet mit Ankerrührer, Thermometer, Rückflußkühler, Gaseinleitungsrohr und Tropftrichter. Die zur Polymerisation vorgelegten Lösungen wurden mit Stickstoff gespült.

Beispiel 1

Herstellung eines Copolymers aus Acrylsäure und 5 % Diallylaminomethylenphosphonsäure

2,5 g Diallylamino-methylenphosphonsäure werden in 100 g Wasser und 20 g Isopropanol gelöst und unter Einleiten eines Stickstoffstroms auf 75 °C erwärmt. Bei dieser Temperatur werden synchron aus 2 Tropftrichtern eine Katalysatorlösung, bestehend aus 1,5 g $(NH_4)_2S_2O_8$ in 30 g Wasser, und 47,5 g Acrylsäure zugetropft. Nach Beendigung der exothermen Reaktionsphase wird 4 Stunden bei 80 °C nachgerührt. Die farblose, 25 %ige Polymerlösung hat eine Eigenviskosität K zwischen 20 und 25.

Beispiel 2

Herstellung eines Copolymers aus Acrylsäure und 10 % Diallylaminomethylenphosphonsäure

Eine Mischung aus 100 g Wasser und 20 g Isopropanol wird unter Durchleiten eines Stickstoffstroms auf 80 °C erwärmt. Es werden aus zwei Tropftrichtern synchron eine Lösung von 5 g Diallylamino-methylenphosphonsäure in 45 g Acrylsäure sowie eine Lösung von 1,5 g $(NH_4)_2S_2O_8$ in 30 g Wasser zugetropft. Nach 4 Stunden Nachrühren erhält man eine 25 %ige Polymerlösung mit einer Eigenviskosität K zwischen 15 und 20.

Beispiel 3

Herstellung eines Copolymers aus Acrylsäure und 10 % Diallylaminomethylenphosphonsäure

5 g Diallylamino-methylenphosphonsäure werden in 120 g Wasser gelöst und unter Einleiten eines Stickstoffstroms auf 80 °C erwärmt. Bei dieser Temperatur werden synchron aus 2 Tropftrichtern eine Katalysatorlösung, bestehend aus 1,5 g $(NH_4)_2S_2O_8$ in 30 g Wasser, und eine Mischung aus 45 g Acrylsäure und 4,5 g Thioglykolsäure zugetropft. Nach Beendigung der exothermen Reaktionsphase wird 4 Stunden bei 80 °C nachgerührt. Daraufhin wird 15 g 30 %iges $H_2O_2$ zugegeben und eine weitere Stunde bei 80 °C gerührt. Die farblose, 25 %ige Polymerlösung hat eine Eigenviskosität K zwischen 15 und 20.

Beispiel 4

Herstellung eines Copolymers aus Acrylsäure und 25 % Diallylaminomethylenphosphonsäure

12,5 g Diallylamino-methylenphosphonsäure werden in einer Mischung aus 100 g Wasser und 20 g Isopropanol gelöst und unter Einleiten eines Stickstoffstroms auf 75 °C erwärmt. Bei dieser Temperatur werden synchron aus 2 Tropftrichtern eine Katalysatorlösung, bestehend aus 1,5 g $(NH_4)_2S_2O_8$ in 30 g Wasser, und 37,5 g Acrylsäure zugetropft. Nach Beendigung der exothermen Reaktionsphase wird 4 Stunden bei 80 °C nachgerührt. Die farblose, 25 %ige Polymerlösung hat eine Eigenviskosität K zwischen 15 und 20.

Beispiel 5

Herstellung eines Copolymers aus Acrylsäure und Diallylamino- methylenphosphonsäure unter Verwendung von $H_2O_2$ als Radikalkettenstarter

Man verfährt wie in Beispiel 2 beschrieben, verwendet als Katalysator jedoch 4,5 g 30 %iges $H_2O_2$ in 30 ml Wasser. Man erhält eine 25 %ige Polymerlösung mit einer Eigenviskosität K zwischen 15 und 20.

Beispiele 6 und 7

Herstellung von Copolymeren aus Methacrylsäure und Diallylamino-methylenphosphonsäure

Man verfährt wie in Beispiel 1 beschrieben unter Verwendung von Methacrylsäure und 1 % (Beispiel 5) bzw. 10 % (Beispiel 6) Diallylamino-methylenphosphonsäure.

Beispiel 8

Herstellung eines Terpolymers aus Acrylsäure, Maleinsäure und Diallylamino-methylenphosphonsäure

Man verfährt wie in Beispiel 1 beschrieben unter Verwendung von 2,5 g Diallylamino-methylenphosphonsäure, 24 g Acrylsäure und 24 g Maleinsäureanhydrid.

Beispiel 9

Herstellung eines Terpolymers aus Acrylsäure, Vinylacetat und Diallylamino-methylenphosphonsäure-diethylester

30 g Acrylsäure, 30 g Vinylacetat und 6,5 g Diallylamino- methylenphosphonsäure-diethylester werden in 174 g Toluol gelöst und unter Durchleiten eines Stickstoffstroms auf 80 °C erwärmt. Aus einem Tropftrichter wird eine Katalysatorlösung von 0,2 g AIBN in 12 g Toluol hinzugefügt. Nach Beendigung der exothermen Reaktionsphase wird 4 Stunden nachreagieren gelassen.
Das Polymer wird anschließend durch Zugabe von 1N NaOH unter Abdestillieren des org. Lösungsmittels verseift. Man erhält eine 30 %ige Polymerlösung mit einer Eigenviskosität K zwischen 20 und 25.

Beispiel 10 (Vergleichsbeispiel)

Herstellung eines Copolymers aus Acrylsäure und Diallylaminomethylenphosphonsäure mit hohem K-Wert

Eine Lösung von 10 g Diallylamino-methylenphosphonsäure in 285 g Wasserwird unter Durchleiten eines Stickstoffstroms auf 40 °C erwärmt. Bei dieser Temperatur werden synchron aus zwei Tropftrichtern eine Katalysatorlösung, bestehend aus 3 g $(NH_4)S_2O_8$ in 54 g Wasser, sowie 90 g Acrylsäure zugetropft. Nach 5 Stunden Nachrühren bei 50 °C erhält man eine 20 %ige Polymerlösung mit einer Eigenviskosität K zwischen 130 und 140.

Bei diesem Vergleichsbeispiel erfolgte die Polymerisation bei relativ niedrigen Temperaturen entsprechend den Angaben in der JP-OS 50-72 987. Die so erhältlichen Polymere zeigen jedoch keine Wirkung als Steinverhinderer.

Anwendungsbeispiele

1. Steinverhinderer Bariumsulfat

Die steinverhindernde Wirkung wurde mit einem Rohrverstopfungstest (tube plugging test) nachgewiesen. Das Prinzip dieses Prüfverfahrens besteht in der Verfolgung des Druckaufbaus innerhalb einer flüssigkeitsdurchströmten, thermostatisierten Kapillare durch Ablagerung von Feststoffen. Gewählt wurde ein kommerzielles Gerät der Fa. S.B. Systems, Aberdeen, des Typs PMAC.

Beim Prüfen auf die Verhinderung von Bariumsulfatablagerungen wurden folgende Lösungen gemischt:

| | |
|---|---|
| 1. Sulfat-Lösung | 74,92 g/l NaCl |
| | 0,93 g/l $Na_2SO_4$ |
| | 2,35 g/l $NaHCO_3$ |
| 2. Barium-Lösung | 70,09 g/l NaCl |
| | 1,36 g/l $BaCl_2$ |
| | 1,93 g/l $CaCl_2 \cdot 2H_2O$ |
| | 3,81 g/l $MgCl_2 \cdot 6H_2O$ |

Mit einer Schlauchpumpe wurden die beiden Lösungen kontinuierlich vermischt und durch eine Edelstahlkapillare von 1,1 mm innerem Durchmesser gepumpt. Ein empfindlicher Drucksensor registrierte den Druckanstieg in der auf 70 °C temperierten Kapillare.

Ein leichter Anstieg auf ca. 0,2 bar wurde abgewartet, um die Abscheidung einer geringen Bariumsulfatmenge auf der Stahloberfläche zu erzeugen. Dann wurde die inhibitorfreie Lösung 1 rasch durch eine inhibitorhaltige Lösung gleicher Zusammensetzung ersetzt. Blieb der Druck konstant, wurde auf erfolgreiche Inhibierung der $BaSO_4$-Abscheidung geschlossen. Stieg der Druck an, war die Inhibitormenge bzw. bei gleicher Konzentration die Art des Inhibitors ungenügend zur Verhinderung der Steinbildung. Für die Effektivitätsbeurteilung wurde somit die minimale Konzentration an Inhibitor genommen, die gerade noch die Ablagerung verhindert.

In vergleichenden Versuchen wurden mit diesem Verfahren folgende Abstufungen beobachtet:

| Menge Inhibitor (ohne Lösemittel) | | | | | |
|---|---|---|---|---|---|
| Produkt | 50 ppm | 40 ppm | 35ppm | 30ppm | 25 ppm |
| Beispiel 1 | + + + | + + + | + + + | + + + | --- |
| Beispiel 2 | + + + | + + + | + + + | + + + | --- |
| Beispiel 3 | + + + | + + + | + + + | + + + | --- |
| Beispiel 8 | + + + | + + + | + + + | + + + | --- |
| Beispiel 9 | + + + | --- | --- | --- | --- |
| Beispiel 10 | --- | --- | --- | --- | --- |
| Diallylaminomethylenphosphonsäure, Homopolymer | --- | --- | --- | --- | --- |
| ®Nalco V936 | + + + | --- | --- | --- | --- |
| ®Petrolite SP181 | + + + | + + + | + + + | --- | --- |
| ®Petrolite SP 245 | + + + | + + + | + + + | --- | --- |

Damit zeigen die erfindungsgemäßen Verbindungen schon bei niedrigeren Konzentrationen eine Wirkung gegen Steinablagerungen im Vergleich zu den vielfach eingesetzten Handelsprodukten der Firmen Petrolite bzw. Nalco.

2. Steinverhinderer Calciumcarbonat

Beim Prüfen auf die Verhinderung von Calciumcarbonatablagerungen wurden folgende Lösungen gemischt:

| | | |
|---|---|---|
| Lsg. I | NaCl<br>$CaCl_2 \times 2H_2O$<br>$MgCl_2 \times 6H_2O$<br>KCl | 23 g/l<br>2,14 g/l<br>0,376 g/l<br>0,84 g/l |
| Lsg. II | NaCl<br>$NaHCO_3$ | 23 g/l<br>5 g/l 80 °C |

Mit einer Schlauchpumpe wurden die beiden Lösungen kontinuierlich durch eine Mischzelle und eine Edelstahlkapillare von 1,1 mm innerem Durchmesser gepumpt. Ein empfindlicher Drucksensor registrierte den Druckanstieg in der auf 80 °C temperierten Kapillare.

Ein Anstieg auf ca. 0,8 bar wurde abgewartet, um die Abscheidung einer dünnen Calciumcarbonatschicht auf der Stahloberfläche zu erzeugen. Dann wurde über eine zweite Pumpe der Scaleinhibitor kontinuierlich in die Mischzelle zugegeben. Blieb der Druck konstant, wurde auf erfolgreiche Inhibierung der $CaCo_3$-Abscheidung geschlossen. Stieg der Druck an, war die Inhibitormenge bzw. bei gleicher Konzentration die Art des Inhibitors ungenügend zur Verhinderung der Steinbildung. Für die Effektivitätsbeurteilung wurde somit die minimale Konzentration an Inhibitor genommen, die gerade noch die Ablagerung verhindert.

In vergleichenden Versuchen wurden mit diesem Verfahren folgende Abstufungen beobachtet

| Menge Inhibitor (ohne Lösemittel) | | | | |
|---|---|---|---|---|
| Produkt | 15ppm | 10ppm | 5ppm | 2ppm |
| Beispiel 2 | + + + | + + + | --- | --- |
| Beispiel 3 | + + + | + + + | --- | --- |
| Beispiel 4 | + + + | + + + | + + + | --- |
| ®Bellasol S40 | + + + | + + + | + + + | --- |
| ®Petrolite SP237 | + + + | + + + | + + + | --- |
| ®Dodiscale V2870 | + + + | + + + | + + + | --- |

Damit Zeigen die erfindungsgemäßen Polymere auch gegen $CaCO_3$-Stein eine mit vielfach eingesetzten Handelsmarken vergleichbare Wirkung (Dodiscale V2870, Bellasol S40 und Petrolite SP237 sind Handelsmarken der Firmen Hoechst, Ciba-Geigy bzw. Petrolite).

3. Calciumbindevermögen und Calciumdispergierung

Die Dispergierung von Calciumcarbonat wurde nach der Filtriermethode unter folgenden Testbedingungen bestimmt: 4 mmol $CaCl_2$, 4,4 mmol $Na_2CO_3$, 2 mmol NaOH, 250 ppm Polymer, T = 40 °C. Die Copolymere nach Beispielen 1 und 2 dispergieren $CaCO_3$ fast vollständig und wesentlich besser als das zum Vergleich gemessene Handelsprodukt ®Sokalan CP5 (BASF).
Das Calciumbindevermögen wurde durch Messung der Konzentration an freiem $Ca^{2+}$ mit der Ca-empfindlichen Elektrode in 70 mmol $NH_3$/30 mmol $NH_4Cl$-Puffer bei einer Gesamtkonzentration an Calcium von 2 mmol gemessen und durch Extrapolation auf $C_{polymer} \rightarrow 0$ berechnet.

| Produkt | Anteil $CaCO_3$ dispergiert | Ca-Bindevermögen [mMol Ca/g Polymer] |
|---|---|---|
| Beispiel 1 | 85 % | 4,6 |
| Beispiel 2 | 87 % | 4,4 |
| ®Sokalan CP 5 | 23 % | 5,6 |

## Patentansprüche

1. Copolymere mit einem niedrigen mittleren Molekulargewicht entsprechend einer Eigenviskosität im Bereich von 10 bis 100 aus 0,1-50 Mol-%, bevorzugt 1-15 Mol-% mindestens eines Diallylaminomethylenphosphonats der Formel Ia oder Ib

$(CH_2=CH\text{-}CH_2)_2N^{+}(R^1)\text{-}CHR^2\text{-}PO_3M^{-}$,  (Ia)

$(CH_2=CH\text{-}CH_2)_2N\text{-}CHR^2\text{-}PO_3M_2$  (Ib)

worin $R^1$ für Wasserstoff, $C_1$- bis $C_{22}$-, bevorzugt $C_1$- bis $C_4$-Alkyl, Phenyl oder $C_2$- bis $C_4$-Alkenyl steht,
$R^2$ für Wasserstoff, $C_1$- bis $C_4$-Alkyl oder Phenyl steht
und M für Wasserstoff, ein Kation wie $Na^+$, $K^+$, $NH_4^+$, für $C_1$- bis $C_4$-Alkyl oder Benzyl steht,
und 99,9-50 Mol-%, bevorzugt 99-85 Mol-% mindestens einer ethylenisch ungesättigten Carbonsäure der Formel II

$R^3R^4C=CR^5Y$,  (II)

worin $R^3$ für Wasserstoff oder eine Gruppe der Formel COOM steht,
$R^4$ für Wasserstoff, Phenyl oder eine Gruppe der Formel COOM steht,
$R^5$ für Wasserstoff, Methyl oder eine Gruppe der Formel COOM oder $CH_2COOM$ steht,
$R^4$ und Y zusammen für eine Gruppe der Formel -C(O)-O-C(O)- stehen oder
Y für eine Gruppe der Formel COOM steht oder
$R^4$ und $R^5$ zusammen für einen $C_4$-Alkylenrest oder
$R^5$ und Y zusammen für eine Gruppe der Formel $-CH_2$-C(O)-O- C(O)- stehen und M für Wasserstoff oder ein Kation steht,
sowie 0 bis 10 Mol-% weiterer ethylenisch ungesättigter Monomere.

**2.** Copolymere nach Anspruch 1, dadurch gekennzeichnet, daß sie als weitere ethylenisch ungesättigte Monomere Vinylsulfonsäure, Allylsulfonsäure, Vinylacetat,
Vinylphosphonsäure, Vinylpyrrolidon, Acrylamid, N-Methyl-acrylamid, 2-Acrylamido-2-methylpropansulfonsäure, oder Allylverbindungen der Formel III

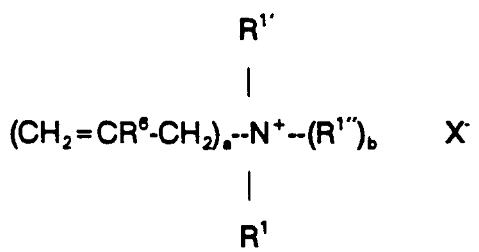
(III)

worin $R^1$, $R^{1'}$ und $R^{1''}$ unabhängig voneinander die oben für $R^1$ gegebenen Bedeutungen haben oder für die Gruppe $CHR^2\text{-}PO_3M_2$ stehen,
M für Wasserstoff, ein Kation oder $C_1$ bis $C_4$-Alkyl oder Phenyl steht,
$R^6$ für Wasserstoff oder Methyl steht,
a = 1 oder 2, b = 0 oder 1 und a + b = 2 ist und $X^-$ für ein Anion einer organischen oder anorganischen Säure steht, einpolymerisiert enthalten.

**3.** Copolymere nach Anspruch 1 oder 2, dadurch gekennzeichnet, daß sie als Monomere der Formeln Ia/Ib Diallylaminomethylenphosphonsäure, Diallylaminoethylenphosphonsäure, Diallylaminobenzylidenphosphonsäure, Diallylaminomethylenphosphonsäure-diethylester einpolymerisiert enthalten.

**4.** Copolymere nach einem der Ansprüche 1 bis 3, dadurch gekennzeichnet, daß sie als Monomere der Formel II Acrylsäure, Methacrylsäure, Maleinsäure, Maleinsäureanhydrid, Itaconsäure, Zimtsäure oder deren niedere Alkylester einpolymerisiert enthalten.

**5.** Verfahren zur Herstellung der Copolymeren nach einem der Ansprüche 1 bis 4, dadurch gekennzeichnet, daß man 0,1 bis 50 Mol-% der Monomere der Formeln Ia/Ib, 99,9 bis 50 Mol-% der Monomere der Formel II sowie 0 bis 10 Mol-% der weiteren ethylenisch ungesättigten Monomere in Wasser und/oder

in einem mit Wasser mischbaren organischen Lösemittel, gegebenenfalls unter Zugabe eines Reglers, in Gegenwart eines Radikalkettenstarters bei Temperaturen oberhalb 70 °C polymerisiert.

**6.** Verfahren zur Herstellung der Copolymeren nach einem der Ansprüche 1 bis 4, dadurch gekennzeichnet, daß man 0,1 bis 50 Mol-% der Monomere der Formel Ia/Ib, 99,9 bis 50 Mol-% der Monomere der Formel II sowie 0 bis 10 Mol-% der weiteren ethylenisch ungesättigten Monomere in Wasser und/oder in einem mit Wasser mischbaren organischem Lösemittel unter Zugabe von 0,001-50 Gew.-% eines Reglers in Gegenwart eines Radikalkettenstarters polymerisiert.

**7.** Verwendung der Copolymeren nach Anspruch 1 zur Verhinderung der Steinbildung und als Builder oder Co-Builder in Waschmitteln.

**Patentansprüche für folgenden Vertragsstaat : ES**

**1.** Verfahren zur Herstellung Von Copolymeren mit einem niedrigen mittleren Molekulargewicht entsprechend einer Eigenviskosität im Bereich von 10 bis 100 aus 0,1 - 50 Mol-%, bevorzugt 1 - 15 Mol-% mindestens eines Diallylaminomethylenphosphonats der Formel Ia oder Ib

$(CH_2=CH\text{-}CH_2)_2N^+(R^1)\text{-}CHR^2\text{-}PO_3M^-$, (Ia)

$(CH_2=CH\text{-}CH_2)_2N\text{-}CHR^2\text{-}PO_3M_2$, (Ib)

worin $R^1$ für Wasserstoff, $C_1$-$C_{22}$-, bevorzugt $C_1$-$C_4$-Alkyl, Phenyl oder $C_2$-$C_4$-Alkenyl steht,
$R^2$ für Wasserstoff, $C_1$-$C_4$-Alkyl oder Phenyl steht
und M für Wasserstoff, ein Kation wie $Na^+$, $K^+$, $NH_4^+$, für $C_1$-$C_4$-Alkyl oder Benzyl steht,
und 99,9 - 50 Mol-%, bevorzugt 99 - 85 Mol-% mindestens einer ethylenisch ungesättigten Carbonsäure der Formel II

$R^3R^4C=CR^5Y$, (II)

worin $R^3$ für Wasserstoff oder eine Gruppe der Formel COOM steht,
$R^4$ für Wasserstoff, Phenyl oder eine Gruppe der Formel COOM steht,
$R^5$ für Wasserstoff, Methyl oder eine Gruppe der Formel COOM oder $CH_2COOM$ steht,
Y für eine Gruppe der Formel COOM steht oder
$R^4$ und $R^5$ zusammen für einen $C_4$-Alkylenrest oder
$R^4$ und Y zusammen für eine Gruppe der Formel -C(O)-O-C(O)- stehen oder
$R^5$ und Y zusammen für eine Gruppe der Formel $-CH_2$-C(O)-O- C(O)- stehen und M für Wasserstoff oder ein Kation steht,
sowie 0 bis 10 Mol-% weiterer ethylenisch ungesättigter Monomere, dadurch gekennzeichnet, daß man 0,1 bis 50 Mol-% der Monomere der Formeln Ia/Ib, 99,9 bis 50 Mol-% der Monomere der Formel II sowie 0 bis 10 Mol-% der weiteren ethylenisch ungesättigten Monomere in Wasser und/oder in einem mit Wasser mischbaren organischen Lösemittel, gegebenenfalls unter Zugabe eines Reglers, in Gegenwart eines Radikalkettenstarters bei Temperaturen oberhalb 70 °C polymerisiert.

**2.** Verfahren nach Anspruch 1, dadurch gekennzeichnet, daß die Copolymere als weitere ethylenisch ungesättigte Monomere, Vinylsulfonsäure, Allylsulfonsäure, Vinylacetat, Vinylphosphonsäure, Vinylpyrrolidon, Acrylamid, N-Methyl-acrylamid, 2-Acrylamido-2-methylpropansulfonsäure, oder Allylverbindung der Formel III

$$
\begin{array}{c} R^{1'} \\ | \\ (CH_2=CR^6\text{-}CH_2)_a\text{--}N^+\text{--}(R^{1''})_b \\ | \\ R^1 \end{array} \qquad X^- \qquad (III)
$$

worin $R^1$, $R^{1'}$ und $R^{1''}$ unabhängig voneinander die oben für $R^1$ gegebenen Bedeutungen haben oder für die Gruppe $CHR^2\text{-}PO_3M_2$ stehen,
M für Wasserstoff, ein Kation oder $C_1$-$C_4$-Alkyl oder Phenyl steht,
$R^6$ für Wasserstoff oder Methyl steht,
a = 1 oder 2, b = 0 oder 1 und a + b = 2 ist und X' für Anion einer organischen oder anorganischen Säure steht, einpolymerisiert enthalten.

**3.** Verfahren nach Anspruch 1, dadurch gekennzeichnet, daß die Copolymere als Monomere der Formel Ia/Ib Diallylaminomethylenphosphonsäure, Diallylaminoethylenphosphonsäure, Diallylaminobenzylidenphosphonsäure, Diallylaminomethylenphosphonsäure-diethylester einpolymerisiert enthalten.

**4.** Verfahren nach Anspruch 1, dadurch gekennzeichnet, daß die Copolymere als Monomere der Formel II Acrylsäure, Methacrylsäure, Maleinsäure, Maleinsäureanhydrid, Itaconsäure, Zimtsäure oder deren niedere Alkylester einpolymerisiert enthalten.

**5.** Verfahren zur Herstellung von Copolymeren mit einem niedrigen mittleren Molekulargewicht entsprechend einer Eigenviskosität im Bereich von 10 bis 100 aus 0,1 - 50 Mol-%, bevorzugt 1 - 15 Mol-% mindestens eines Diallylaminomethylenphosphonats der Formel Ia oder Ib

$(CH_2=CH\text{-}CH_2)_2N^+(R^1)\text{-}CHR^2\text{-}PO_3M^-$, (Ia)

$(CH_2=CH\text{-}CH_2)_2N\text{-}CHR^2\text{-}PO_3M_2$, (Ib)

worin $R^1$ für Wasserstoff, $C_1$-$C_{22}$-, bevorzugt $C_1$-$C_4$-Alkyl, Phenyl oder $C_2$-$C_4$-Alkenyl steht,
$R^2$ für Wasserstoff, $C_1$-$C_4$-Alkyl oder Phenyl steht
und M für Wasserstoff, ein Kation wie $Na^+$, $K^+$, $NH_4^+$, für $C_1$-$C_4$-Alkyl oder Benzyl steht,
und 99,9 - 50 Mol-%, bevorzugt 99 - 85 Mol-% mindestens einer ethylenisch ungesättigten Carbonsäure der Formel II

$R^3R^4C=CR^5Y$, (II)

worin $R^3$ für Wasserstoff oder eine Gruppe der Formel COOM steht,
$R^4$ für Wasserstoff, Phenyl oder eine Gruppe der Formel COOM steht,
$R^5$ für Wasserstoff, Methyl oder eine Gruppe der Formel COOM oder $CH_2COOM$ steht,
Y für eine Gruppe der Formel COOM steht oder
$R^4$ und $R^5$ zusammen für einen $C_4$-Alkylenrest oder
$R^4$ und Y zusammen für eine Gruppe der Formel -C(O)-O-C(O)- stehen oder
$R^5$ und Y zusammen für eine Gruppe der Formel $-CH_2\text{-}C(O)\text{-}O\text{-}C(O)\text{-}$ stehen und M für Wasserstoff oder ein Kation steht,
sowie 0 bis 10 Mol-% weiterer ethylenisch ungesättigter Monomere, dadurch gekennzeichnet, daß man 0,1 bis 50 Mol-% der Monomere der Formeln Ia/Ib, 99,9 bis 50 Mol-% der Monomere der Formel II sowie 0 bis 10 Mol-% der weiteren ethylenisch ungesättigten Monomere in Wasser und/oder in einem mit Wasser mischbaren organischen Lösemittel unter Zugabe von 0,001 - 50 Gew.-% eines Reglers in Gegenwart eines Radikalkettenstarters polymerisiert.

**6.** Verfahren nach Anspruch 5, dadurch gekennzeichnet, daß die Copolymere als weitere ethylenisch ungesättigte Monomere, Vinylsulfonsäure, Allylsulfonsäure, Vinylacetat, Vinylphosphonsäure, Vinylpyrrolidon, Acrylamid, N-Methyl-acrylamid, 2-Acrylamido-2-methylpropansulfonsäure, oder Allylverbindung der Formel III

$$\begin{array}{c} R^{1'} \\ | \\ (CH_2{=}CR^6\text{-}CH_2)_a\text{--}N^+\text{--}(R^{1''})_b \\ | \\ R^1 \end{array} \qquad X^- \qquad (III)$$

worin $R^1$, $R^{1'}$ und $R^{1''}$ unabhängig voneinander die oben für $R^1$ gegebenen Bedeutungen haben oder für die Gruppe $CHR^2\text{-}PO_3M_2$ stehen,
M für Wasserstoff, ein Kation oder $C_1$-$C_4$-Alkyl oder Phenyl steht,
$R^6$ für Wasserstoff oder Methyl steht,
a = 1 oder 2, b = 0 oder 1 und a + b = 2 ist und X' für Anion einer organischen oder anorganischen Säure steht, einpolymerisiert enthalten.

**7.** Verfahren nach Anspruch 5, dadurch gekennzeichnet, daß die Copolymere als Monomere der Formeln Ia/Ib Diallylaminomethylenphosphonsäure, Diallylaminoethylenphosphonsäure, Diallylaminobenzylidenphosphonsäure, Diallylaminomethylenphosphonsäure-diethylester einpolymerisiert enthalten.

**8.** Verfahren nach Anspruch 5, dadurch gekennzeichnet, daß die Copolymere als Monomere der Formel II Acrylsäure, Methacrylsäure, Maleinsäure, Maleinsäureanhydrid, Itaconsäure, Zimtsäure oder deren niedere Alkylester einpolymerisiert enthalten.

**9.** Verwendung der Copolymeren nach Anspruch 1 zur Verhinderung der Steinbildung und als Builder oder Co-Builder in Waschmitteln.

Europäisches Patentamt

# EUROPÄISCHER RECHERCHENBERICHT

Nummer der Anmeldung

EP 92 10 0052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 161 596 (HOECHST A G)<br>--- | 1-7 | C08F222/02<br>C08F220/04<br>C08F230/02 |
| A | EP-A-0 159 185 (CALGON CORPORATION)<br>--- | 1-7 | |
| A | EP-A-0 125 519 (COATEX)<br>--- | 1-7 | |
| A | EP-A-0 076 992 (BASF)<br>----- | 1-7 | |
| | | | **RECHERCHIERTE SACHGEBIETE (Int. Cl.5 )** |
| | | | C08F<br>C11D |

Der vorliegende Recherchenbericht wurde für alle Patentansprüche erstellt

| Recherchenort | Abschlußdatum der Recherche | Prüfer |
|---|---|---|
| DEN HAAG | 23 MAERZ 1992 | ANDRIOLLO G. R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument